# FASCICULE DE BREVET EUROPEEN

(11) **EP 1 572 481 B1**
(45) Date de publication et mention de la délivrance du brevet: **19.04.2006**
(21) Numéro de dépôt: 03799632.9
(22) Date de dépôt: 18.12.2003
(51) Int. Cl.: B60J 7/14, B60J 7/12

(54) **DISPOSITIF DE MISE EN TENSION DU TOIT RETRACTABLE D'UN VEHICULE AUTOMOBILE**
SPANNUNGSVORRICHTUNG FÜR EIN ÖFFNUNGSFÄHIGES DACH EINES KRAFTFAHRZEUGS
DEVICE FOR TENSIONING THE RETRACTABLE TOP OF A MOTOR VEHICLE

(30) Priorité: 20.12.2002 FR 0216394
(43) Date de publication de la demande: 14.09.2005
(73) Titulaire: Société Européenne des Brevets Automobiles, 75011 Paris (FR)
(72) Inventeur: QUEVEAU, Gérard, F-79140 Le Pin (FR); DESCHARTES, Bernard, F-79300 Bressuire (FR)
(74) Mandataire: Breese Derambure Majerowicz
(86) Numéro de dépôt international: PCT/FR2003/003800
(87) Numéro de publication internationale: WO 2004/060707

(56) Documents cités:
- DE-C- 19 810 022
- FR-A- 2 802 478
- US-A- 5 944 375

## Description

La présente invention concerne un dispositif de mise en tension d'un toit rétractable de véhicule automobile, et plus particulièrement un tel dispositif destiné à un toit comportant un élément avant et un élément arrière déplaçables entre une position de fermeture dans laquelle lesdits éléments recouvrent l'habitacle du véhicule et une position d'ouverture dans laquelle lesdits éléments sont repliés à l'intérieur du coffre du véhicule, le déplacement des éléments étant commandé par deux bras articulés chacun d'une part sur la structure du véhicule à proximité du bord avant du coffre, et d'autre part sur l'élément avant du toit, de sorte que les deux bras et leurs articulations respectives forment un parallélogramme déformable, ledit dispositif comportant des moyens de butée portés par un premier bras pour venir en butée contre le deuxième bras lorsque les deux éléments de toit sont dans une position relative proche de leur position de fermeture.

L'invention concerne aussi un toit rétractable comportant um tel dispositif, et un véhicule comportant un tel toit.

Un tel dispositif est connu par le document FR-A-2 802 478.

Les moyens de butée occasionnent, lors de fermeture du toit, une tension entre les deux bras qui rigidifie le toit et réduit par conséquent les vibrations du toit lors du roulage du véhicule. En outre, cette rigidification du toit permet à celui-ci de participer à la rigidité de l'ensemble de la caisse du véhicule, comme dans le cas dans un véhicule pourvu d'un toit fixe.

Dans le document précité, les moyens de butée sont constitués d'un excentrique dont le réglage est réalisé par rotation autour d'un point fixe par rapport au bras sur lequel il est monté, l'excentrique est bloqué lorsqu'il vient en contact avec l'autre bras dans une position relative des éléments proche de la position de fermeture.

Un tel agencement donne d'une manière générale satisfaction.

Toutefois, il présente l'inconvénient d'un réglage délicat. A défaut d'un réglage quasiment parfait, certaines vibrations peuvent demeurer.

En outre, il n'est pas toujours adapté selon le type de véhicule auquel il est destiné. En particulier, il peut être difficile à mettre en oeuvre lorsque la distance entre les bras au point souhaité de butée est importante.

La présente invention vise à palier ces inconvénients.

Plus particulièrement, l'invention a pour but limiter encore les vibrations lors du roulage du véhicule, ainsi que de faciliter le réglage des moyens de butée.

A cet effet, l'invention a tout d'abord pour objet un dispositif de mise en tension d'un toit rétractable de véhicule automobile, ledit toit comportant un élément avant et un élément arrière déplaçables entre une position de fermeture dans laquelle lesdits éléments recouvrent l'habitacle du véhicule et une position d'ouverture dans laquelle lesdits éléments sont repliés à l'intérieur du coffre du véhicule, le déplacement des éléments étant commandé par deux bras articulés chacun d'une part sur la structure du véhicule à proximité du bord avant du coffre, et d'autre part sur l'élément avant du toit, de sorte que les deux bras et leurs articulations respectives forment un parallélogramme déformable, ledit dispositif comportant des moyens de butée portés par un premier bras pour venir en butée contre le deuxième bras lorsque les deux éléments de toit sont dans une position relative proche de leur position de fermeture, les moyens de butée comportant des moyens élastiques aptes à s'opposer au mouvement relatif desdits bras lorsque lesdits éléments de toit viennent de leur dite position relative proche de leur position de fermeture à leur dite position de fermeture.

Ainsi, à la mise en tension des éléments de toit lors de la fermeture du toit s'ajoute une certaine élasticité propre à filtrer des vibrations qui ne seraient pas déjà éliminées.

On observera que l'élément avant n'est pas nécessairement celui qui se raccorde au pare-brise du véhicule. Il s'agit de celui qui est "en avant" de l'élément arrière généralement constitué par la lunette arrière du véhicule. Ainsi, l'invention s'applique à un toit ayant un nombre quelconque d'éléments.

Dans un mode de réalisation particulier, lesdits moyens de butée comprennent des moyens de fixation audit premier bras, un organe de butée coulissant par rapport auxdits moyens de fixation, et des moyens de réglage de la position relative des moyens de fixation et de l'organe de butée.

On observera qu'un tel agencement pourrait éventuellement être utilisé indépendamment des moyens élastiques précités, à seule fin de remplacer si nécessaire l'excentrique de l'art antérieur.

Plus particulièrement, ledit organe de butée peut comprendre une tige lisse montée coulissante dans une première ouverture de section correspondante des moyens de fixation, les moyens de réglage comprenant une tige filetée engagée dans une ouverture filetée des moyens de fixation coaxiale à ladite première ouverture, lesdits moyens élastiques étant disposés entre la tige lisse et la tige filetée.

Le réglage de la butée s'effectue ainsi par simple vissage ou dévissage de la tige filetée dans l'ouverture filetée des moyens de fixation.

Egalement dans un mode de réalisation particulier, le dispositif selon l'invention comprend en outre des moyens de blocage de la position de réglage relative des moyens de fixation et de l'organe de butée.

Plus particulièrement, lesdits de moyens de blocage peuvent comprendre un contre-écrou engagé sur ladite tige filetée et coopérant avec les moyens de fixation.

Egalement dans un mode de réalisation particulier, le dispositif selon l'invention comprend un étrier de liaison entre la tige lisse et la tige filetée, chaque tige traversant une ouverture de l'étrier et possédant un épaulement d'appui sur l'étrier, lesdits moyens élastiques pressant chaque épaulement contre une surface d'appui respective de l'étrier.

Le dispositif selon l'invention peut également comprendre des deuxièmes moyens élastiques entre ledit étrier et lesdits moyens de fixation, agencés pour repousser ledit étrier en direction de ladite ouverture filetée.

L'invention a également pour objet un toit rétractable pour véhicule automobile, comportant un dispositif de mise en tension tel que décrit ci-dessus.

L'invention a également pour objet un véhicule automobile comportant un tel toit rétractable.

On décrira maintenant, à titre d'exemple non limitatif, un mode de réalisation particulier de l'invention, en référence aux dessins schématiques annexés dans lesquels :
- la figure 1 est une vue d'ensemble en élévation d'un toit rétractable selon l'invention ;
- la figure 2 est une vue à plus grande échelle du dispositif de mise en tension selon l'invention ; et
- la figure 3 est une vue à encore plus grande échelle, en coupe selon la ligne III-III de la figure 2.

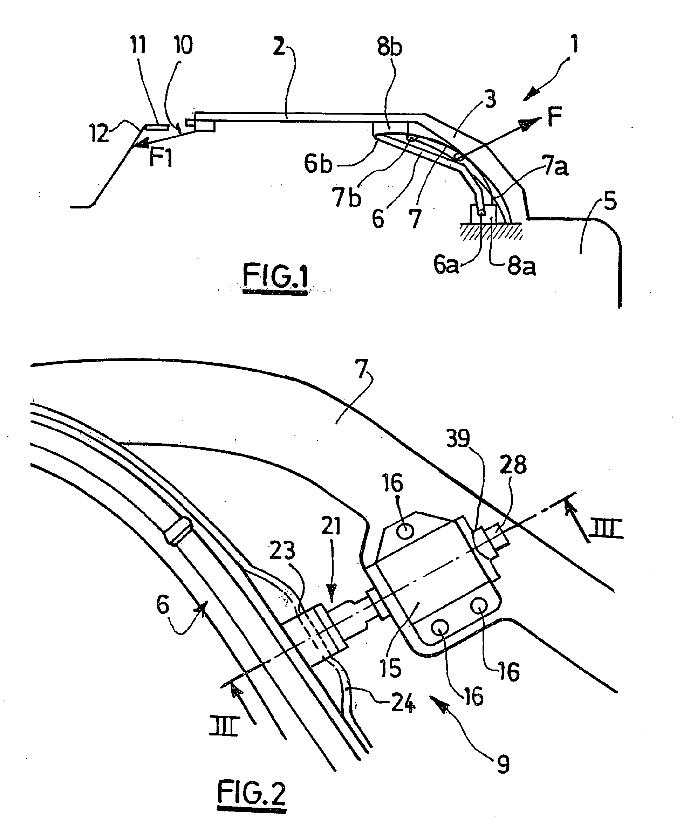

Comme montré à la figure 1, le toit rétractable du véhicule 1 comporte un élément avant 2 formant le pavillon et un élément arrière 3 formant la lunette arrière.

Les deux éléments 2, 3 sont déplaçables entre une position de fermeture dans laquelle ils recouvrent l'habitacle 4 du véhicule 1 et une position d'ouverture dans laquelle ils sont repliés à l'intérieur du coffre arrière 5 du véhicule 1.

Le déplacement des éléments de toit 2, 3 est commandé par un bras avant 6 et un bras arrière 7 capables de pivoter vers le haut de l'avant vers l'arrière et vice versa.

Chacun des deux bras 6, 7 est articulé autour d'un axe 6a, 7a à un support 8a solidaire de la caisse du véhicule à proximité du bord avant du coffre 5, et autour d'un axe 6b, 7b à un support 8b solidaire de l'élément 2 du toit. Ainsi, les bras 6, 7 forment un parallélogramme déformable.

L'élément arrière 3 du toit est fixé au bras arrière 7.

Dans l'exemple représenté, le bras arrière 7 porte des moyens de butée 9 agencés pour coopérer avec le bras avant 6 lorsque les éléments 2, 3 sont dans leur position de fermeture. Bien entendu, les moyens de butée 9 pourraient être portés par le bras 6 et coopérer avec le bras 7.

Le déplacement des éléments de toit 2, 3 de leur position d'ouverture vers leur position de fermeture et réciproquement est de préférence obtenu à l'aide d'un actionneur, tel qu'un moteur électrique ou un vérin hydraulique, non représenté.

Le toit rétractable comprend enfin des moyens tels qu'un verrou 10 et une gâche 11 pour verrouiller manuellement ou par un système électrique ou hydraulique, en fin de course de fermeture, le bord avant de l'élément avant 2 du toit au bord supérieur 12 du pare-brise du véhicule.

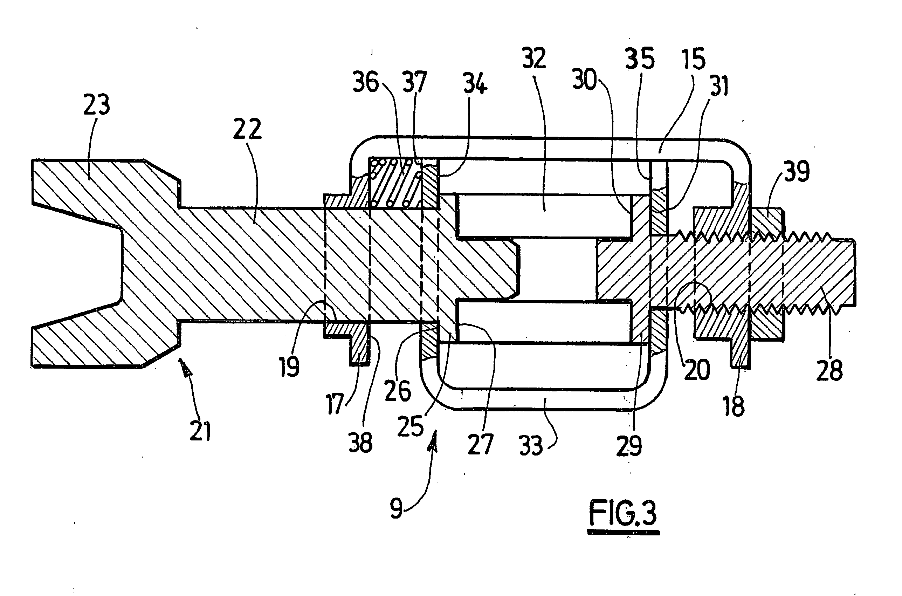

Les moyens de butée 9 seront maintenant décrits plus en détail en référence aux figures 2 et 3.

Ces moyens de butée 9 sont fixés au bras 7, par l'intermédiaire d'une platine de montage 15, en trois points de fixation 16.

La platine 15 est pliée pour former deux rebords parallèles 17 et 18 en vis-à-vis.

Le rebord 17 possède une ouverture 19 dont la paroi intérieure est lisse et le rebord 18 possède une ouverture 20 dont la paroi intérieure est filetée. Les ouvertures 19 et 20 sont coaxiales.

Un organe de butée 21 possède une tige 22 de section correspondante à celle de l'ouverture 19 et est montée coulissante dans cette ouverture. Une des extrémités de l'organe de butée 21 se trouve donc à l'intérieur de la platine 15 et l'autre extrémité à l'extérieur.

Cette autre extrémité forme une butée 23 en fourche, susceptible de venir en butée sur une ferrure d'appui 24 solidaire du bras 6. L'extrémité opposée de l'organe de butée 21 forme une saillie annulaire 25 déterminant deux épaulements opposés, un épaulement 26 faisant face à la butée 23 et un épaulement 27 faisant face à l'extrémité opposée.

Une tige filetée 28 est vissée dans le filetage de l'ouverture 20. Une des extrémités de la tige 28 se trouve donc à l'intérieur de la platine 15 et l'autre extrémité à l'extérieur. En vissant ou en dévissant la tige 28, on règle sa position longitudinale par rapport à la platine 15.

L'extrémité extérieure de la tige filetée 28 possède des moyens de vissage ; elle est par exemple de section carrée ou hexagonale. L'extrémité opposée de la tige 28 forme une saillie annulaire 29 déterminant deux épaulements opposés, un épaulement 30 en vis-à-vis de l'épaulement 27 de l'organe de butée 21 et un épaulement 31 tourné du côté opposé.

Des moyens élastiques, par exemple un anneau en élastomère 32 ou un ressort hélicoïdal, sont disposés entre les épaulements 27 de l'organe de butée 21 et 30 de la tige filetée 28. Ainsi, lorsque l'anneau 32 est comprimé, il tend à écarter l'organe de butée 21 de la tige filetée 28.

Un étrier de liaison 33 possède deux faces d'appui 34 et 35 en vis-à-vis. Cet étrier possède des découpes engagées sur les tiges 22 et 28, et la distance entre les faces 34 et 35 est telle que l'anneau 32 est comprimé axialement, plaquant les épaulements 26 de l'organe de butée 21 et 31 de la tige filetée 28 contre les faces d'appui 34 et 35 respectivement.

Un ressort 36 est disposé entre la face 37 de l'étrier de liaison 33 opposée à la face d'appui 34, et la face 38 du rebord 17 en vis-à-vis. Par conséquent, ce ressort maintient l'étrier 33 en contact avec l'épaulement 26 de l'organe de butée 21 lorsque l'anneau 32 est comprimé axialement.

Enfin, un contre-écrou 39 est vissé sur la tige filetée 28 à l'extérieur de la platine 15 pour assurer le blocage de la tige une fois sa position réglée.

Le réglage du dispositif qui vient d'être décrit s'effectue de la manière suivante.

Le toit est tout d'abord amené dans une position prédéterminée proche de sa position de fermeture.

Dans cette position, on amène la butée 23 au contact de la ferrure d'appui 24 en faisant tourner la tige filetée 28. Pendant ce réglage, l'ensemble constitué par la tige filetée 28, l'anneau élastique 32, et l'organe de butée 21 se déplacent vers la gauche de la figure 2, en entraînant l'étrier 33. Les raideurs respectives de l'anneau 32 et du ressort 36 sont telles que l'anneau 32 ne se comprime sensiblement pas, seul le ressort 36 se comprimant.

Lorsque la butée 23 est au contact de la ferrure d'appui 24, le contre-écrou 39 est serré sur la tige filetée 28 au contact du rebord 18 de la platine de fixation 15. La tige filetée est ainsi bloquée, et le dispositif est réglé.

Lors des fermetures ultérieures du toit, la butée 23 vient tout d'abord en contact avec la ferrure d'appui 24 puis, le mouvement de fermeture se poursuivant, l'anneau élastique 32 se comprime axialement. Pendant cette compression, le ressort 36 maintient la face d'appui 34 de l'étrier 33 en contact avec l'épaulement 26 de l'organe de butée 21.

Lorsque le toit est complètement fermé, les moyens de verrouillage 10, 11 sont enclenchés, ce qui a pour effet d'exercer une traction F1 sur le toit. Par réaction, cette traction F1 engendre une tension F entre les bras 6 et 7 au niveau des moyens de butée 9.

La tension F assure une rigidification du toit et une diminution des vibrations qui sont en outre absorbées par les moyens élastiques 32.

## Revendications

1. Dispositif de mise en tension d'un toit rétractable de véhicule automobile (1), ledit toit comportant un élément avant (2) et un élément arrière (3) déplaçables entre une position de fermeture dans laquelle lesdits éléments (2, 3) recouvrent l'habitacle (4) du véhicule et une position d'ouverture dans laquelle lesdits éléments (2, 3) sont repliés à l'intérieur du coffre arrière (5) du véhicule, le déplacement des éléments étant commandé par deux bras articulés (6, 7) chacun d'une part sur la structure (8a) du véhicule (1) à proximité du bord avant du coffre (5), et d'autre part sur l'élément avant (2) du toit, de sorte que les deux bras (6, 7) et leurs articulations respectives (6a, 6b, 7a, 7b) forment un parallélogramme déformable, ledit dispositif comportant des moyens de butée (9) portés par le premier bras (7) pour venir en butée contre le deuxième bras (6) lorsque les deux éléments de toit (2, 3) sont dans une position relative proche de leur position de fermeture, **caractérisé par le fait que** les moyens de butée (9) comportent des moyens élastiques (32) aptes à s'opposer au mouvement relatif desdits bras (6, 7) lorsque lesdits éléments de toit (2, 3) viennent de leur dite position relative proche de leur position de fermeture à leur dite position de fermeture.

2. Dispositif selon la revendication 1, dans lequel lesdits moyens de butée (9) comprennent des moyens de fixation (15) audit premier bras (7), un organe de butée (21) coulissant par rapport auxdits moyens de fixation (15), et des moyens de réglage (28) de la position relative des moyens de fixation (15) et de l'organe de butée (21).

3. Dispositif selon la revendication 2, dans lequel ledit organe de butée (21) comprend une tige lisse (22) montée coulissante dans une première ouverture (19) de section correspondante des moyens de fixation (15), et les moyens de réglage (28) comprennent une tige filetée engagée dans une ouverture filetée (20) des moyens de fixation (15) coaxiale à ladite première ouverture (19), lesdits moyens élastiques (32) étant disposés entre la tige lisse (22) et la tige filetée (28).

4. Dispositif selon l'une quelconque des revendications 2 et 3, comprenant des moyens de blocage (39) de la position de réglage relative des moyens de fixation (15) et de l'organe de butée (21).

5. Dispositif selon l'ensemble des revendications 3 et 4, dans lequel lesdits de moyens de blocage (39) comprennent un contre-écrou engagé sur ladite tige filetée (28) et coopérant avec les moyens de fixation (15).

6. Dispositif selon l'une quelconque des revendications 3 et 5, comprenant un étrier de liaison (33) entre la tige lisse (22) et la tige filetée (28), et dans lequel chaque tige (22, 28) traverse une ouverture de l'étrier et possède un épaulement d'appui (26, 31) sur l'étrier (33), lesdits moyens élastiques (32) pressant chaque épaulement (26, 31) contre une surface d'appui respective (34, 35) de l'étrier (33).

7. Dispositif selon la revendication 6, comprenant des deuxièmes moyens élastiques (36) entre ledit étrier (33) et lesdits moyens de fixation (15), agencés pour repousser ledit étrier (33) en direction de ladite ouverture filetée (28).

8. Toit rétractable pour véhicule automobile, **caractérisé par le fait qu'**il comporte un dispositif selon l'une quelconque des revendications 1 à 7.

9. Véhicule automobile, **caractérisé par le fait qu'**il comporte un toit rétractable selon la revendication 8.

## Patentansprüche

1. Spannvorrichtung eines Klappdachs eines Kraftfahrzeugs (1), wobei das Dach ein vorderes Element (2) und ein hinteres Element (3) umfasst, die beweglich sind zwischen einer Schließposition, in der die Elemente (2, 3) den Innenraum (4) des Fahrzeug überdecken, und einer Öffnungsposition, in der die Elemente (2, 3) innerhalb des Kofferraums (5) des Fahrzeugs zurückgezogen sind, wobei die Bewegung der Elemente von zwei gelenkigen Armen (6, 7) gesteuert wird, die sich jeweils einerseits an der Struktur (8a) des Fahrzeugs (1) in der Nähe des Vorderrands des Kofferraums (5) und andererseits an dem vorderen Element (2) des Dachs befinden, so dass die beiden Arme (6, 7) und ihre jeweiligen Gelenke (6a, 6b, 7a, 7b) ein verformbares Parallelogramm bilden, wobei die Vorrichtung von dem ersten Arm (7) getragene Anschlagmittel (9) umfasst, um gegen den zweiten Arm (6) anzuschlagen, wenn sich die beiden Dachelemente (2, 3) in einer relativen Position in der Nähe ihrer Schließposition befinden, **dadurch gekennzeichnet, dass** die Anschlagmittel (9) Federmittel (32) umfassen, die der Relativbewegung der Arme (6, 7) entgegenwirken können, wenn die Dachelemente (2, 3) sich aus ihrer relativen Position in der Nähe ihrer Schließposition in ihre Schließposition bewegen.

2. Vorrichtung nach Anspruch 1, bei der die Anschlagmittel (9) Befestigungsmittel (15) am ersten Arm (7), ein in Bezug auf die Befestigungsmittel gleitendes Anschlagorgan (21) sowie Einstellmittel (28) der relativen Position der Befestigungsmittel (15) und des Anschlagorgans (21) umfassen.

3. Vorrichtung nach Anspruch 2, bei der das Anschlagorgan (21) eine glatte Stange (22) umfasst, die gleitend in einer ersten Öffnung (19) mit einem den Befestigungsmitteln (15) entsprechenden Querschnitt montiert ist, und die Einstellmittel (28) eine Gewindestange umfassen, die in eine zur ersten Öffnung (19) koaxiale Gewindeöffnung (20) der Befestigungsmittel (15) eingreift, wobei die Federmittel (32) zwischen der glatten Stange (22) und der Gewindestange (28) angeordnet sind.

4. Vorrichtung nach einem der Ansprüche 2 und 3, mit Arretiermitteln (39) der relativen Einstellposition der Befestigungsmittel (15) und des Anschlagorgans (21).

5. Vorrichtung nach beiden Ansprüchen 3 und 4, bei der die Arretiermittel (39) eine Gegenmutter aufweisen, die auf der Gewindestange (28) sitzt und mit den Befestigungsmitteln (15) zusammenwirkt.

6. Vorrichtung nach einem der Ansprüche 3 und 5, mit einem Verbindungsbügel (33) zwischen der glatten Stange (22) und der Gewindestange (28), und bei der jede Stange (22, 28) durch eine Öffnung des Bügels verläuft und eine Abstützschulter (26, 31) am Bügel (33) aufweist, wobei die Federmittel (32) jede Schulter (26, 31) gegen eine jeweilige Stützfläche (34, 35) des Bügels drücken.

7. Vorrichtung nach Anspruch 6, mit zweiten Federmitteln (36) zwischen dem Bügel (33) und den Befestigungsmitteln (15), die vorgesehen sind, um den Bügel (33) in Richtung auf die Gewindeöffnung (28) zurückzudrücken.

8. Klappdach für Kraftfahrzeug, **dadurch gekennzeichnet, dass** es eine Vorrichtung nach einem der Ansprüche 1 bis 7 aufweist.

9. Kraftfahrzeug, **dadurch gekennzeichnet, dass** es ein Klappdach nach Anspruch 8 aufweist.

## Claims

1. A device for tensioning a retractable roof (1) of a motor vehicle, said roof including a front element (2) and a rear element (3) that are mounted to be movable between a closed position in which said elements (2, 3) cover the passenger compartment (4) of the vehicle and an open position in which said elements (2, 3) are folded away into the rear trunk (5) of the vehicle, the elements being caused to move by two hinged arms (6, 7), each of which is hinged firstly to the structure (8a) of the vehicle (1) in the vicinity of the front edge of the trunk (5), and secondly to the front element (2) of the roof, so that the two arms (6, 7) and their respective hinges (6a, 6b, 7a, 7b) form a deformable parallelogram, said device including abutment means (9) carried by the first arm (7) to come into abutment against the second arm (6) when the two roof elements (2, 3) are in a relative position that is close to their closed position, said device being **characterized by** the fact that the abutment means (9) include resilient means (32) suitable for opposing the relative movement of said arms (6, 7) when said roof elements (2, 3) come from their said relative position that is near their closed position to their said closed position.

2. A device according to claim 1, in which said abutment means (9) comprise fastening means (15) for fastening to said first arm (7), an abutment member (21) that is mounted to slide relative to said fastening means (15), and adjustment means (28) for adjusting the relative position of the fastening means (15) and of the abutment member (21).

3. A device according to claim 2, in which said abutment member (21) comprises a smooth rod (22) mounted to slide in a first opening (19) of corresponding cross-section in the fastening means (15), and the adjustment means (28) comprise a threaded rod engaged in a tapped opening (20) in the fastening means (15) in alignment with said first opening (19), said resilient means (32) being disposed between the smooth rod (22) and the threaded rod (28).

4. A device according to claim 2 or claim 3, including locking means (39) for locking the adjusted relative position of the fastening means (15) and of the abutment member (21).

5. A device according to claim 3 and claim 4, in which said locking means (39) comprise a locknut engaged on said threaded rod (28) and co-operating with the fastening means (15).

6. A device according to any one of claims 3 to 5, including a coupling hoop (33) for coupling together the smooth rod (22) and the threaded rod (28), and in which each rod (22, 28) passes through an opening in the hoop and has a bearing shoulder (26, 31) for bearing against the hoop (33), said resilient means (32) pressing each shoulder (33) against a respective bearing surface (34, 35) of the hoop (33).

7. A device according to claim 6, including second resilient means (36) between said hoop (33) and said fastening means (15), which second resilient means are arranged to push said hoop (33) towards said tapped opening (28).

8. A retractable roof for a motor vehicle, said roof being **characterized by** the fact that it includes a device according to any one of claims 1 to 7.

9. A motor vehicle, **characterized by** the fact that it includes a retractable roof according to claim 8.
